# EUROPEAN PATENT SPECIFICATION

(11) **EP 4 065 840 B1**
(45) Date of publication and mention of the grant of the patent: **01.04.2026**
(21) Application number: 20807662.0
(22) Date of filing: 12.11.2020
(51) Int. Cl.: F03D 13/20, F03D 13/40

(54) **IMPROVEMENTS RELATING TO ENVIRONMENTAL PROTECTION COVERS FOR WIND TURBINE STRUCTURES**
VERBESSERUNGEN IM ZUSAMMENHANG MIT UMWELTSCHUTZABDECKUNGEN FÜR WINDTURBINENSTRUKTUREN
AMÉLIORATIONS RELATIVES AUX CLOISONS DE PROTECTION POUR LES STRUCTURES D'ÉOLIENNES

(30) Priority: 26.11.2019 EP 19211508
(43) Date of publication of application: 05.10.2022
(73) Proprietor: VESTAS WIND SYSTEMS A/S, 8200 Aarhus N (DK)
(72) Inventor: OLSEN, Anders, 8500 Grenaa (DK); BARTENS, Malene, 8544 Mørke (DK); FLINDT, Jesper Vildsø, 5250 Odense SV (DK)
(74) Representative: Vestas Patents Department
(86) International application number: PCT/DK2020/050307
(87) International publication number: WO 2021/104587

(56) References cited:
- EP-A1- 2 381 103
- WO-A1-2018/149528
- WO-A1-2019/110086
- CN-A- 104 947 716
- POWER: "Focus on O&M (November 2007)", 14 November 2007 (2007-11-14), XP055696344, Retrieved from the Internet <URL:https://www.powermag.com/focus-on-om-november-2007/> [retrieved on 20200518]

## Description

### TECHNICAL FIELD

Aspects of the invention relate to techniques, apparatus and methods for covering openings in wind turbine structures, particularly but not exclusively for the purposes of weatherproofing.

### BACKGROUND

Wind turbines are sealed structures so as to protect their interiors from the external environment. Although wind turbines will have various doors and hatchways so that maintenance crew can enter, in general the rest of the wind turbine will not be open to the external environment during operation. During construction and installation, however, it may be the case that internal sections and compartments of the wind turbine need to be left exposed to the environment. For example, the wind turbine tower may be erected before other components such as the hub, nacelle and blades arrive at the installation site. In this situation therefore, the top of the tower may be left exposed for a long period of time until the nacelle is installed. Similarly, for transport purposes the hub is typically carried without its blades attached. The apertures in the hub which would ordinarily support the blades may therefore be open to the environment.

The conventional way of dealing with this problem is to apply fabric covers or closures to any openings of the wind turbine structure which need to be covered up to protect the interior of the structure from the potential harsh external environment. Although generally considered to be adequate, the conventional fabric covers have their limitations: for instance, that they can be problematic to tie down over an opening; their flexibility can result in flapping during high wind that can promote the ingress of water, particularly as spray, they generally require a respective frame if they are to provide a 'peaked' cover of some sort, which increases weight and complexity. Accordingly, an improved solution is sought for protecting the openings in wind turbine structures.

WO2018149528 discloses a method for temporarily covering an opening in a component of a wind turbine, comprising the steps: - positioning a cover comprising an inflatable torus and a tarpaulin, whose circumference is attached to the torus, over the opening such that the torus extends around the outer circumference of a wall whose inner circumference delimits the opening and that the tarpaulin extends across the opening, and - inflating the torus to attach the cover to the component.

### SUMMARY OF THE INVENTION

According to a first aspect of the embodiments of the invention, there is provided a wind turbine structure comprising: a surface defining at least in part an opening, and a closure system provided adjacent the opening, the closure system including an inflatable closure that is inflatable into a deployed state in which the inflatable closure engages the surface so as to cover at least a portion of the opening.

In this way, the invention advantageously allows for a portion of the wind turbine structure to be protected from the external environment. For example, when inflated the inflatable closure may protect the structure from ingress of water, snow, ice and/or other contaminants. The wind turbine structure to be protected may be in the form of, for example but not limited to, a tower or tower segment or section, a foundation, a hub, or a blade.

In some embodiments, the closure system may be provided within, and/or be attached to, the wind turbine structure.

The inflatable closure may define an edge profile that is configured to match a complementary engaging profile defined by the surface of the opening.

The inflatable closure may define a substantially planar body in the deployed state. The inflatable closure in the deployed state may define a plurality of ribs interconnected by webs. Incorporating ribs on the inflatable closure enhances the structural rigidity of the closure, and may be especially beneficial when the closure is to be used across large openings, to help prevent sagging.

The closure system may include a housing which is configured to contain the inflatable enclosure in a stowed state.

The closure system comprises a rigid plate that covers at least a portion of the opening.

The inflatable closure may be housed at least partially within the rigid plate in the stowed state. The rigid plate may be foldable, which may be advantageous, for example, during transport of the closure system, allowing a dimension of the closure system to be reduced if required or helpful.

The closure system may include an inflation pump to inflate the inflatable enclosure. The inflation pump may be operable to deflate the inflatable enclosure.

The inflatable closure may be mounted on an edge of the opening.

The inflatable closure may engage the surface to form a water-tight seal. In some embodiments, the water-tight seal may be realised using a rubber or silicone member provided between the inflatable closure and the surface of the opening that the closure engages when inflated. A water-tight seal may be particularly important in offshore environments to prevent salt sprays or salt containing aerosols, which may be very corrosive, from entering the structure.

The inflatable closure comprises multiple air-tight internal chambers that can be individually inflated and deflated. Including multiple air-tight chambers that can be controlled separately to inflate and/or deflate individually provides the system with an enhanced level of flexibility. For example, this functionality may be useful in a situation in which a portion of the opening of the wind turbine structure must be accessible, but it would be beneficial for the remainder to be covered and protected.

Additionally or alternatively, the closure system comprises multiple inflatable closures. In this way, multiple openings or portions of the opening may be covered separately, again adding flexibility to the system. Furthermore, a very large opening, or an opening with a complicated shape, may be fully covered more easily.

The inflatable closure may comprise a base layer of drop-stitch material.

According to another aspect of the invention, there is provided a method of at least partially covering an opening of a wind turbine structure, the method comprising; providing a closure system including an inflatable closure adjacent the opening; and inflating the inflatable closure from a stowed state to a deployed state in which the inflatable closure covers at least a portion of the opening.

The method may comprise engaging the inflatable closure with a surface that defines, at least in part, the opening.

Engaging the inflatable closure with the surface may comprise engaging an edge profile of the inflatable closure with a complementary engaging profile defined by the surface of the opening.

The method may comprise inflating the inflatable closure from a housing in which it is contained in the stowed state.

The method comprises inflating the inflatable closure from a housing that forms part of a rigid plate that covers at least a portion of the opening.

The method may comprise deflating the inflatable closure so as to provide access to a portion of the opening.

The method may comprise inflating and/or deflating multiple air-tight internal chambers of the inflatable closure individually. The method may comprise inflating and/or deflating at least one of the internal chambers before at least one other of the internal chambers.

The method may comprise remotely activating inflation and/or deflation of the inflatable closure. Activating inflation and/or deflation of the closure or closures remotely removes the need for personnel to travel to the site and do so manually, thus saving time and resources.

### BRIEF DESCRIPTION OF THE DRAWINGS

The invention will now be described by way of example with reference to the accompanying drawings, in which:
Figure 1 is a wind turbine that may comprise a wind turbine structure in accordance with an embodiment of the invention;
Figure 2 is a perspective view of wind turbine structure comprising a closure system in accordance with an embodiment of the invention;
Figure 3 is a perspective view of the wind turbine structure of Figure 2, showing an inflatable closure of the closure system in its housing;
Figure 4 is a perspective view of the wind turbine structure of Figure 2, showing the inflatable closure in a partially deployed state;
Figure 5 is a perspective view of the wind turbine structure of Figure 2, showing the inflatable closure in a fully deployed state;
Figure 6 is a cross-sectional view of the wind turbine structure of Figure 5, showing engagement of the inflatable closure with a flange of the wind turbine structure;
Figure 7a is a cross-sectional view of a closure system in accordance with another embodiment of the invention;
Figure 7b is a cross-sectional view of a closure system in accordance with another embodiment of the invention;
Figure 8a is a cross-sectional view of a closure system having multiple inflatable closures in accordance with another embodiment of the invention;
Figure 8b is a perspective view of the closure system of Figure 8a;
Figure 9a is a perspective view of another wind turbine structure in accordance with an embodiment of the invention, showing an inflatable closure in a stowed state;
Figure 9b is a perspective view of the wind turbine structure of Figure 9a, showing the inflatable closure in a partially deployed state;
Figure 9c is a perspective view of the wind turbine structure of Figure 9a, showing the inflatable closure in a fully deployed state;
Figure 10 is a plan view of another wind turbine structure in accordance with the invention, in which the closure system includes a rigid frame;
Figure 11 is a perspective view of a portion of the wind turbine structure of Figure 10, showing an inflatable closure housed within the rigid frame in a stowed state; and
Figure 12 is a perspective view showing a closure system in accordance with another embodiment of the invention being deployed from a stowed state to a deployed state.

### DETAILED DESCRIPTION

The following detailed description refers to the accompanying drawings that show, by way of illustration, specific details and embodiments in which the invention may be practiced. These embodiments are described in sufficient detail to enable those of ordinary skill in the art to practice the invention. Other embodiments may be utilised, and structural changes may be made without departing from the scope of the invention as defined in the appended claims.

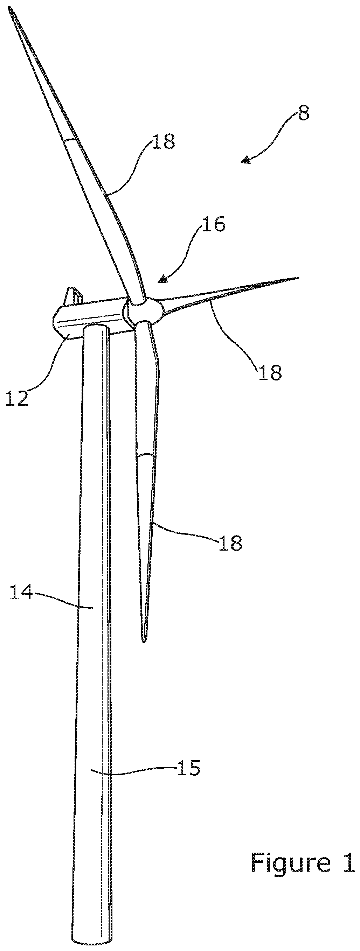

Figure 1 shows a wind turbine 8 that may comprise a wind turbine structure 10 in accordance with an embodiment of the invention. The wind turbine 8 includes a nacelle 12 that is supported on a generally vertical tower 14, which is itself mounted to a foundation (not shown). The tower 14 is formed of a number of tower segments 15, which are attached end-to-end. The nacelle 12 houses a number of functional components, including a gearbox and a generator (not shown), and supports a main rotor arrangement 16. The main rotor arrangement 16 comprises a plurality of wind turbine blades 18, and in this example comprises three wind turbine blades 18.

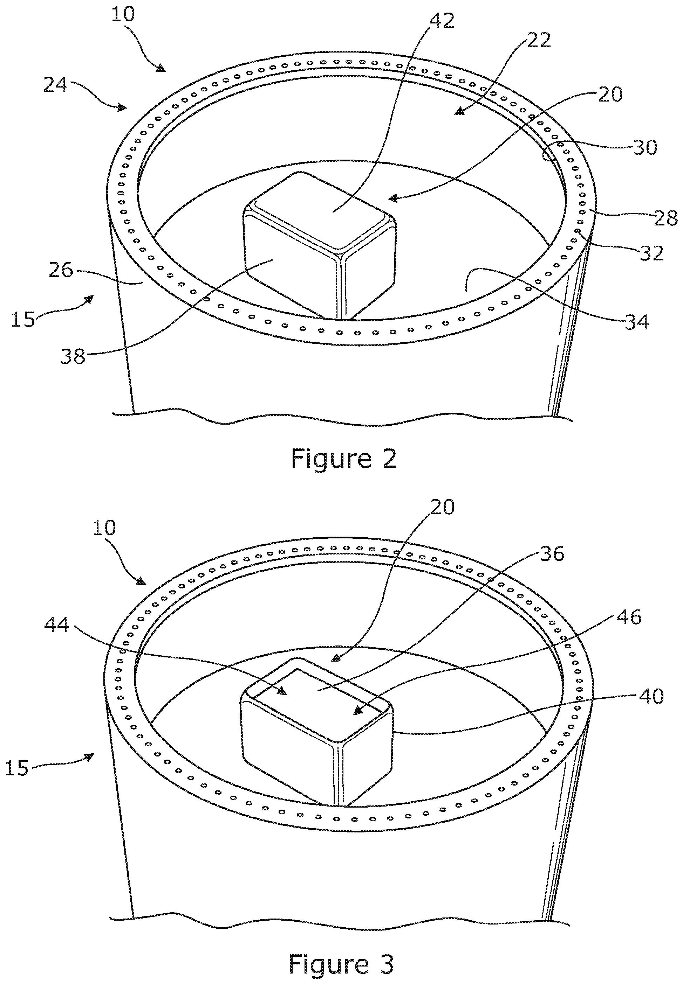

Examples of wind turbine structures 10 are towers or tower sections, foundations, transition pieces, blades, hubs, nacelles, and wind turbine structure support which may, for example, be provided at a preassembly site or on a vessel. Figures 2 to 5 illustrate a wind turbine structure 10 in accordance with an embodiment of the invention, exemplified in a non-limiting manner by a tower section 15 having an opening 22 at its top or upper end 24.

The wind turbine structure 10 comprises a closure system 20 that is configured to at least partially cover an opening 22 of the wind turbine structure 10 when deployed, so as to protect the interior of the wind turbine structure 10 from the external environment.

In this embodiment, the opening 22 of the wind turbine structure 10 to be covered is defined at an upper end 24 of a tower segment 15 of the wind turbine 8, to which another tower segment 15, or the nacelle 12, may be attached when the turbine 8 is assembled.

Figure 2 shows a typical situation where the interior of a tower segment 15 is left open during the installation process, ready for another tower segment to be secured on top of it. As can be seen, the tower segment 15 is generally cylindrical and further comprises a lower end (not shown), and an outer surface 26.

The upper end 24 of the tower segment 15 comprises a circumferential flange 28 to which a further tower segment 15, or the nacelle 12, is bolted when the wind turbine 8 is assembled. The circumferential flange 28 extends radially inwardly from the outer surface 26 of the tower segment 15 to an inner surface 30 of the flange 28, and comprises a plurality of fastener-receiving openings or 'bolt holes' 32. The inner surface 30 of the flange 28 defines the opening 22 of the tower segment 15 to be covered. The opening 22 leads to an internal volume or chamber 34 of the tower segment 15, which defines a generally cylindrical volume within the tower segment 15.

The closure system 20 is located within the internal chamber 34 of the wind turbine structure 10, and is positioned adjacent the opening 22. As can be seen in Figure 2, the closure system 20 is preferably located in a generally central position in the internal chamber 34 and slightly set back, along the tower axis, from the tower flange 28. It is in this sense that the closure system 20 is considered to be adjacent to the opening 22, as from this position the closure system 20 can be activated so that components thereof are deployed so as to cover the opening 22, as will be apparent from the discussion that follows.

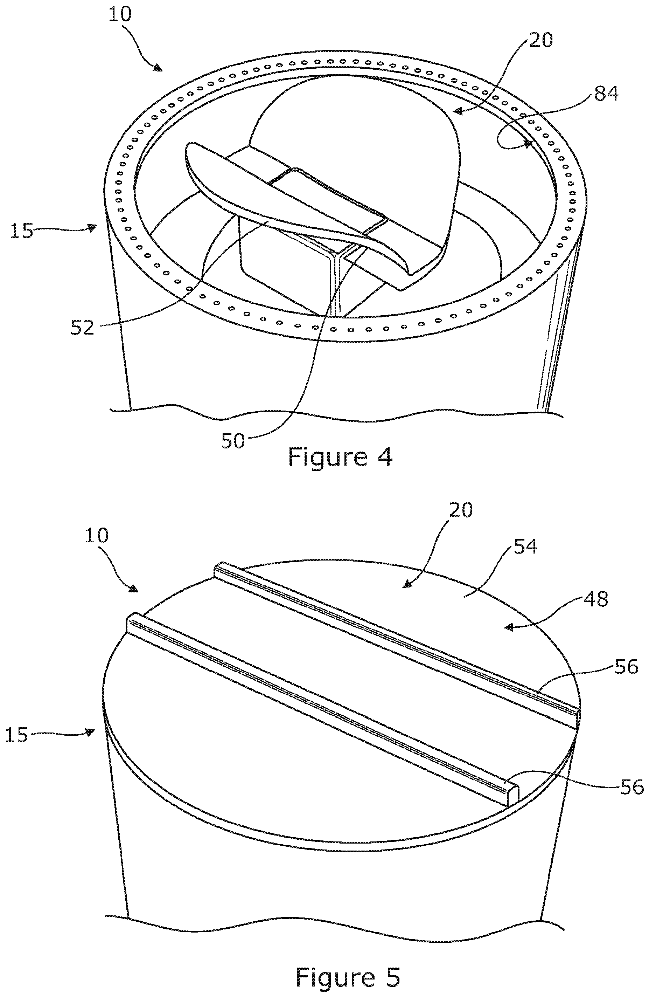

The closure system 20 comprises an inflatable closure 36 that can be deployed from a stowed state illustrated in Figure 2, to a deployed, or inflated, state illustrated in Figure 5. In this embodiment the inflatable closure 36 defines a substantially planar body that fully covers the opening 22 of the wind turbine segment 15 in the deployed state. In other embodiments, the closure 36 may be different shapes and sizes, and may only partially cover the opening 22 when deployed.

Referring to Figures 2 to 4 in particular, the closure system 20 of this embodiment comprises a housing 38 that contains the inflatable closure 36 in the stowed state. The housing 38 includes a body 40 and a lid 42, and in this example has a generally rectangular cross-section, so as to be shaped generally like a box. The body 40 defines an internal volume 44 in which the inflatable closure 36 is housed when stowed, and an opening 46 from which the inflatable closure 36 inflates into its deployed state. The lid 42 is a removable cover that closes the opening 46 of the body 40. Note that the specific example of the housing 38 is given here as an illustration of one configuration of shape and size, but it will be appreciated that the invention should not be considered to be limited to the specifics of the housing 38 as shown here.

As best illustrated in Figure 5, the inflatable closure 36 has a generally circular shape in plan view in this example, and is dimensioned so as to fully cover the circular opening 22 at the upper end 24 of the tower segment 15 when deployed.

The inflatable closure 36 comprises upper and lower surfaces, 48 and 50 respectively, that are generally circular in shape, and a circumferential surface 52 that joins the upper and lower surfaces, 48 and 50 respectively, at their edges. The upper surface 48 faces away from the internal chamber 34 when the inflatable closure 36 is deployed, and the lower surface 50 faces towards the internal chamber 34 when deployed.

The inflatable closure 36 of this embodiment is formed by a base layer (not shown) and an outer layer 54.

The base layer preferably comprises a layer of drop-stitch material/fabric, which is a known technology, for example at www.duletai.com. The drop-stitch material will not be described in detail here but, briefly, is formed by two support layers of polyester woven fabric joined by polyester threads that extend between them.

The outer layer 54 comprises an air tight coating that surrounds and encloses the base layer, and that defines an internal volume or chamber (not shown) that is filled with air when the closure is inflated. In this embodiment, the outer layer 54 includes two elongate ridges or ribs 56 that extend across the upper surface 48 of the closure 36, to enhance its structural rigidity in the deployed state.

The inflatable closure 36 further comprises a valve (not shown) through which the closure is inflated and deflated in use. To inflate and deflate the closure 36, an inflation pump (not shown) is attached to the valve, and the internal volume is filled with or emptied of air using the pump. In other embodiments, the closure 36 may be inflated using an inflator unit that forms a part of the closure system 20. The inflator unit may be integrated within the internal volume of the inflatable closure 36. Examples of suitable inflator units could be electrical blowers, which may be battery powered, canisters of compressed gas e.g. air, or inflators that are based on chemical reactions to generate gas to inflate the closure 36, or on physical reactions (i.e. evaporation or sublimation) to generate gas to inflate the closure 36. If the closure system 20 comprises a housing 38, then it is preferred that the inflator unit is integral with the housing or is integrated in the inflatable closure 36.

The valve may be provided at any position on the inflatable closure 36. In some embodiments, the valve is provided so as to be accessible to a user without removing the inflatable closure 36 from the housing 38. In this way, the inflation pump can be attached to the valve without first removing the inflatable closure 36 from the housing 38. In other embodiments, the valve may be positioned such that the inflatable closure 36 must be removed from the housing 38 before the inflation pump can be attached. In some embodiments, in particular those in which the closure 36 fully covers the opening 22 in the deployed state, the valve is preferably positioned on the upper surface 48 of the closure 36, so as to be accessible even when the closure 36 is fully deployed and secured in place. In some embodiments, in particular those in which the inflatable closure 36 forms a roof over the internal chamber 34 of the structure 10 when deployed, the valve is preferably positioned to face the internal chamber 34. In some embodiments, in particular those where the upper and lower surfaces 48, 50 of the inflatable closure 36 are both accessible after deployment, multiple valves may be arranged on the inflatable closure 36. In particular, at least one valve may be provided on the upper surface 48 of the closure 36 and at least one valve may be provided on the lower surface 50 of the closure 36.

In one embodiment, the valve and/or the inflator unit is remotely operable. This is particularly advantageous where the closure 36 covers an opening 22 that may be used for access of tools to handle, for example to lift, the wind turbine structure 10. The ability to remotely operate the valve and/or the inflator unit removes the need for personnel to travel to the structure 10 to inflate and/or deflate the closure 36, thus saving considerable time and resources. Furthermore, the ability to remotely operate the valve and/or the inflator unit may improve site safety. For example, in a scenario in which a tower section 15 is being lifted on site, it is preferable that personnel are not in the vicinity, because it is unsafe for personnel to be working near or under suspended loads. Remote operation of the valve and/or inflator unit allows an operator to inflate and/or deflate the closure 36 without having to enter the site. In this case, it is preferred that one or more sensors are arranged in the vicinity of the structure 10 so as to provide confirmation that the closure 36 has been properly inflated/deflated/positioned before engagement of, for example, a tool for lifting the structure 10. The one or more sensors may be any suitable sensors, including but not limited to cameras for capturing images and/or video footage, and/or contact/proximity sensors.

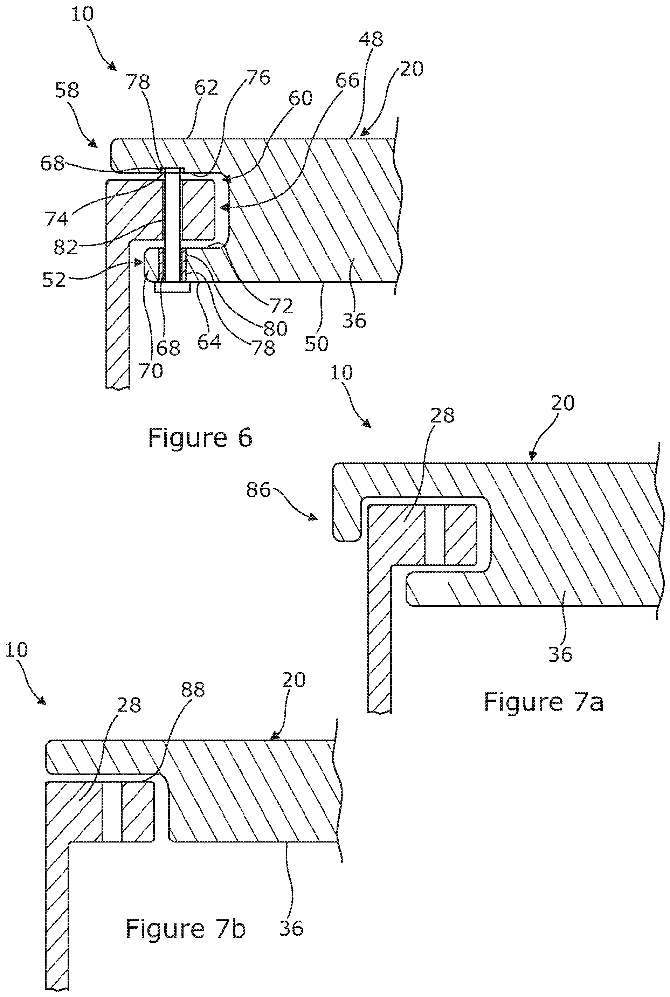

Turning now to Figure 6, this shows how the inflatable closure 36 of the first embodiment of the invention may engage with and be secured to the flange 28 of the tower segment 15 in the deployed state. As is shown clearly in the illustrated embodiment, the edge of the inflatable enclosure 36 features suitable means to secure, fix or otherwise fasten a portion of the inflatable enclosure 36 to the wind turbine structure.

The circumferential surface 52 of the inflatable closure 36 defines an edge profile 58 that includes a flange-receiving aperture 60 defined between upper and lower edge portions, 62 and 64 respectively, of the inflatable closure 36, and configured to receive the flange 28 of the tower segment 15 when deployed. In this way, the flange 28 defines an engaging profile 66 that is complementary to the edge profile 58 of the inflatable closure 36. In this embodiment, the flange receiving aperture 60 forms a circumferential groove that extends around the edge of the inflatable closure 36 and that corresponds to the flange 28 that forms a circumferential edge that extends around the upper end 24 of the tower segment 15.

The upper and lower edge portions, 62 and 64 respectively, each include a plurality of fastener-receiving openings 68. Openings 70 of the lower edge portion 64 define generally circular through-holes that extend from the lower surface 50 of the closure 36, to an upper surface 72 of the lower edge portion 64 that faces the flange 28 when the closure 36 is deployed. Openings 74 of the upper edge portion 62 define generally circular holes in a lower surface 76 of the upper edge portion 62 that faces the flange 28 when the inflatable closure 36 is deployed. Each opening 68 comprises a threaded metal coating or insert 78 on its interior surface 80 for engagement with a bolt 82. It should be appreciated that the use of such fastener receiving openings and corresponding bolts is not required, but is an additional safety feature that may ensure maintained connection between the closure 36 and the structure 10, even in the unlikely event that the closure 36 should lose pressure or be torn from the opening 22 by weather, for example.

When the closure 36 is inflated and properly positioned for use, the flange 28 of the tower segment 15 is received in the flange-receiving aperture 60 of the closure 36, and the fastener-receiving openings 68 of the upper and lower edge portions 62, 64 align with the fastener-receiving openings 32 of the flange 28. Thus, complementary profiles of the closure 36 and the flange 28 are engaged, and the inflatable closure 36 is mounted on an edge 84 of the opening 22.

In this embodiment, the upper edge portion 62 terminates so as to be flush with the outer surface 26 of the tower segment 15. To secure the inflatable closure 36 to the tower segment 15, fasteners such as bolts 82 or screws extend through one or more of the aligned sets of fastener-receiving openings 68, 32 of the upper and lower edge portions 62, 64 of the closure 36 and the flange 28.

The inflatable closure 36 may be deployed during transport of the tower segment 15 to an installation site at which the wind turbine 8 is to be assembled, and up until installation, so as to protect the tower segment 15, and in particular the internal chamber 34 of the tower segment 15, from the external environment. For example, the closure 36 may protect the internal chamber 34 from ingress of water, snow, ice and/or other contaminants. Thus, although Figure 6 shows gaps to exist between the inflated closure 36 and the flange 28, it is preferred that the closure 36 engages the flange 28 in a tight-fit, to form a sealed, and preferably water-tight, connection with the flange 28. For this, a rubber or silicone member (not shown) may be provided between the closure 36 and the flange 28, and the inflated closure 36 may push against the flange 28 and member to form a seal for preventing water or gas ingress. This may be particularly important in offshore environments to prevent salt sprays or salt containing aerosols, which may be very corrosive, from entering the structure 10.

When the wind turbine 8 is ready to be installed, the inflatable closure 36 can simply be deflated via a release valve or using the inflation pump to release air from its interior, and removed from the tower segment 15 along with the housing 38 in which it can be re-packed ready for future use. It is envisaged that suitable fold lines can be introduced to the inflatable enclosure during manufacturing to ensure that the inflatable enclosure can re-configured itself into a stowed state inside the housing 38 when air is pumped out.

Figures 7a and 7b show variations of the inflatable closure 36 of the first embodiment of the invention, in which the circumferential surface 52 has a different profile for engaging with the flange of the tower segment.

In Figure 7a, the upper edge portion 62 extends radially outwardly past the outer surface 26 of the tower segment 15, and downwardly along the outer surface 26 to form a circumferential lip 86. In this way, the wind turbine structure 10 is engaged to prevent relative movement between the flange 28 and the closure 36. In particular, movement of the closure 36 in an upwards direction, a downwards direction, and left and right directions with respect to the view shown in Figure 7a is prevented. The closure 36 is therefore locked to, i.e. retained in place with respect to, the flange 28. In this variant, the circumferential lip 86 and the lower edge portion 64 act to secure the inflatable closure 36 in place without the use of fasteners, but in other embodiments the closure 36 may also include fastener-receiving openings 68 as in the embodiment of Figure 6.

Figure 7b shows a variant of the inflatable closure 36 that preferably engages the flange 28 from one side only. Here, the upper edge portion 62 of the closure 36 terminates at the outer surface 26 of the tower segment 15. The lower edge portion 64 (present in the embodiments of Figure 6 and Figure 7a) is not present. The inflatable closure 36 of this example may simply be supported from underneath by an upper surface 88 of the flange 28, or may include fastener-receiving openings 68 in the upper edge portion 62.

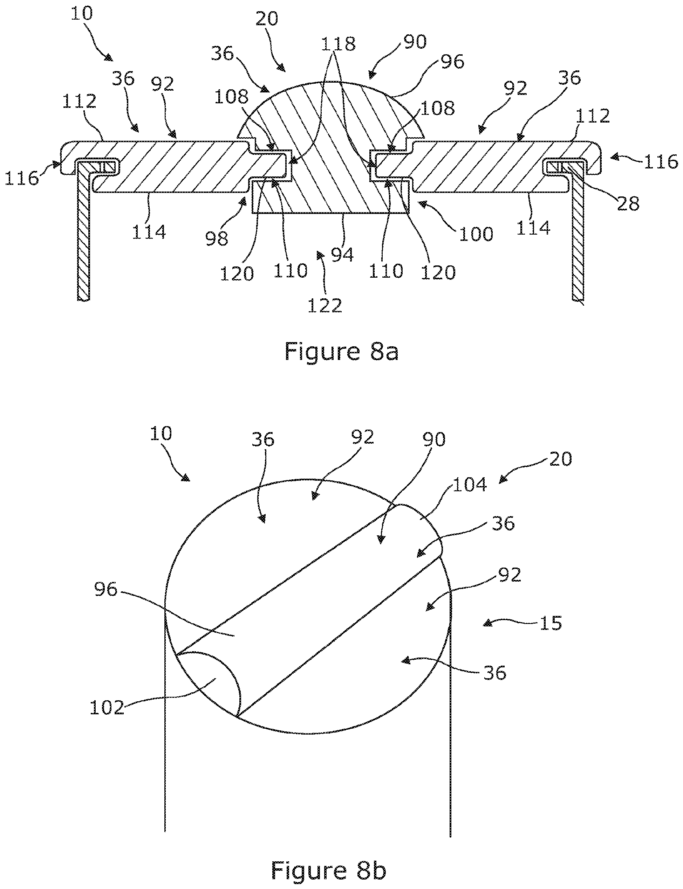

Turning now to Figure 8, this shows a wind turbine structure 10 in accordance with another embodiment of the invention.

In this embodiment, the closure system 20 comprises three inflatable closures 36 which together cover the opening 22 of the tower segment 15 when deployed. As illustrated, the different inflatable enclosures 36 engage with one another when in the inflated state so as to span the gap across the opening 22. Usefully, the different enclosures can contribute different functionality to the overall coverage of the opening 22. For example and as will be described further below, the middle enclosure 90 is formed into generally an I-beam shape so as to provide increased strength and rigidity to the overall closure structure. This may be useful where high loads are expected to be supported by the closure 36, for example after heavy snow fall.

Specifically, the closure system 20 comprises a central closure 90 and two outer closures 92. Each inflatable closure 36 is formed from a base layer and an air-tight outer layer 54, and includes a valve (not shown) for inflation and deflation, as in previous embodiments. In other embodiments one or more of the closures 36 may comprise an airtight inner layer and a protective or structural outer layer.

The central inflatable closure 90 preferably comprises a flat rectangular lower surface 94 and a curved upper surface 96 that generally defines a segment of a cylinder, as is best seen in Figure 8a. The upper and lower surfaces 96, 94 are joined by first and second side faces, 98 and 100 respectively, and first and second end faces, 102 and 104 respectively. Each end face 102, 104 is curved so as to match the curvature of the outer surface 26 of the tower segment 15, and defines a flange-receiving opening (not shown) for receiving the flange 28 in the deployed state. Each side face 98, 100 defines a closure-receiving opening 108 for receiving an edge 110 of a corresponding outer closure 92 in the deployed state. The inflatable closure 36 may be configured so that selected part(s) of the closure 36 inflate sequentially, before or after other part(s) of the closure 36.

This may be illustrated using the embodiment shown in Figure 8b. Here, as an example, a first edge part incorporating an end face 102 or 104 of the central closure 90 may inflate first to secure the central closure 90 on the structure 10, and prevent it from falling off the wind turbine structure 10 during further deployment. Thereafter, a main part of the central closure 90, adjacent the first edge part, may be inflated to spread out the inflatable closure. Finally, a second edge part, adjacent the main part and opposed to the first edge part, and incorporating an end face 102 or 104 of the central closure 90, is inflated to finally secure the whole inflatable closure 90 to the wind turbine structure 10. The order of inflation/deflation may, for example, be realised by the positioning of one or more valves of the closure 90 and/or through sectioning the inflatable closure 90 to produce multiple internal chambers having no, or only small, apertures between them. In the case in which separate internal chambers are present, separate means for inflation of each of these sections/chambers may be provided.

It should be understood that the inflatable closure 36 may take another shape than generally flat. For example, the inflatable closure 36 may take the shape of a dome or pyramid having, for example, 3, 4, 6, 8 or more faces. A non-flat shape has been found to be particularly advantageous for closures 36 acting as a generally horizontal cover of a wind turbine structure 10, as this tends to aid in the removal of rain, snow, dust or other debris from the closure 36, and hence prevents or reduces the risk of build-up of large weights of debris that potentially may damage the closure 36. Non-flat structures may, for example, be realised through the use of ribs, which may or may not be inflatable, and which are integrated with the inflatable closure 36. Alternatively or additionally, non-flat structures may be realised through the use of separate support elements arranged vertically under the closure 36 to support the closure 36.

The outer inflatable closures 92 are identical to each other, and each comprises an upper surface 112 and a lower surface 114. The upper and lower surfaces 112, 114 are joined by an outer side surface 116 that engages with the flange 28 of the tower segment 15 when deployed, and an inner side surface 118 that engages with the central closure 90 when deployed. The outer side surface 116 may for example have an identical profile to the circumferential surface 52 of the embodiment of Figure 7a, or similar functionality, and thus will not be described again for conciseness. The inner side surface 118 defines a protrusion 120 that is dimensioned to be receivable in the closure-receiving opening 108 of the central inflatable closure 90, and that in this example has a rectangular cross-section.

When deployed, the protrusions 120 of the outer closures 92 are received in the closure-receiving openings 108 of the central closure 90, and the flange 28 of the tower segment 15 is received in the flange-receiving openings 60 of the central and outer closures 90, 92. The central closure 90 extends across the diameter of the opening 22, and covers a central portion 122 of the opening 22. The outer closures 92 are positioned on either side of the central inflatable closure 90, and cover the rest of the opening 22.

In this way, the inflatable closures 90, 92 together form a covering that fully covers the opening 22 of the tower segment 15 when deployed. In other embodiments, one or more of the inflatable closures 90, 92 may be omitted, or the dimensions of the closures 90, 92 may differ, such that the inflated closures 90, 92 only partially cover the opening 22 of the tower segment 15 when deployed. This also allows deflation of part of the full closure system 20 to allow access to the inside of the wind turbine structure 10 without complete removal of the closure system 20. For example, to enable access to personnel, or for equipment or tools for lifting the wind turbine structure 10.

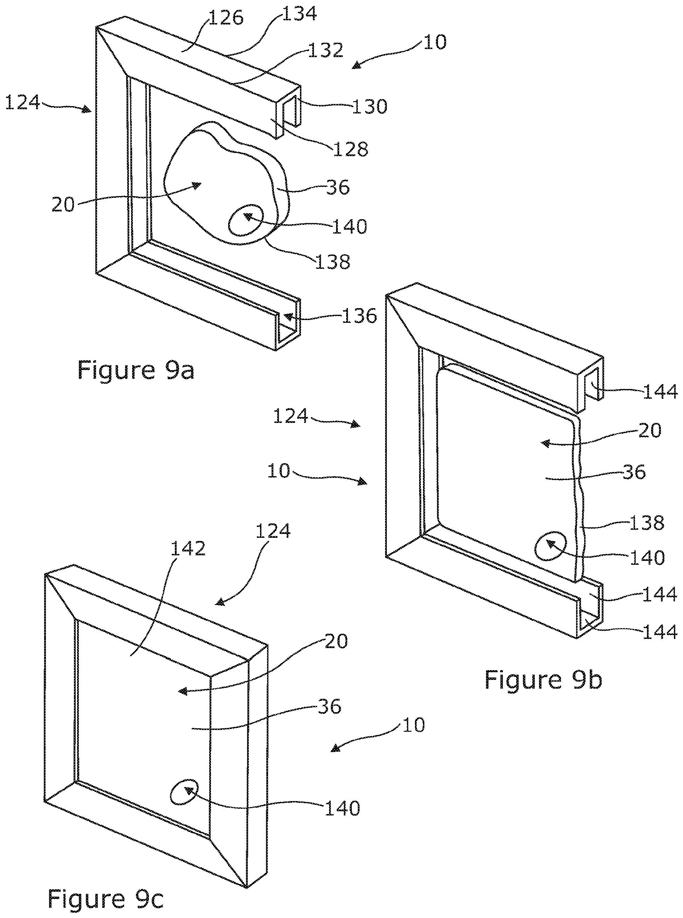

Figure 9 illustrates a wind turbine structure 10 according to another embodiment of the invention.

Figure 9a shows the inflatable closure 36 in an uninflated state, adjacent the opening 22 of a wind turbine structure 10 in which it is to be deployed. In this case, the opening 22 is defined by a frame 124 the forms part of a bigger wind turbine structure.

The frame 124 is generally square-shaped, and comprises a base 126 and first and second flanges 128, 130. Other shapes of the frame 124 such as circular or polyhedral are similarly feasible when the shape of the inflatable closure 36 is shaped accordingly. The first and second flanges 128, 130 extend inwardly towards the centre of the frame 124, from first and second edges 132, 134 of the base 126, and are generally perpendicular to the base 126. In this way, the frame 124 has a U-shaped profile in cross-section, and defines a rectangular aperture 136 in which edges 138 of the inflatable closure 36 are received in the deployed state.

The inflatable closure 36 of this embodiment is generally square when inflated, as shown in Figure 9c, so as to fully cover the square opening 22 defined by the frame 124 in which it is deployed. Similarly to the closure 36 of the first embodiment, the inflatable closure 36 of this embodiment is formed by a base layer and an air-tight outer layer 54 that defines an internal volume. A valve 140 is provided on an upper surface 142 of the closure 36 for inflation and deflation using an inflation pump.

To deploy the inflatable closure 36, an inflation pump is connected to the valve 140, and air is pumped into the closure 36. The closure 36 inflates from an uninflated state shown in Figure 9a, through a partially deployed state shown in Figure 9b, to a fully deployed state shown in Figure 9c. In the deployed state, edges 138 of the inflatable closure 36 are received in the rectangular aperture 136 of the frame 124, and abut against internal surfaces 144 of the frame that define the aperture 136. In this way, the inflatable closure 36 is secured in place with respect to the frame 124 by means of friction between the internal surfaces 144 and the closure 36.

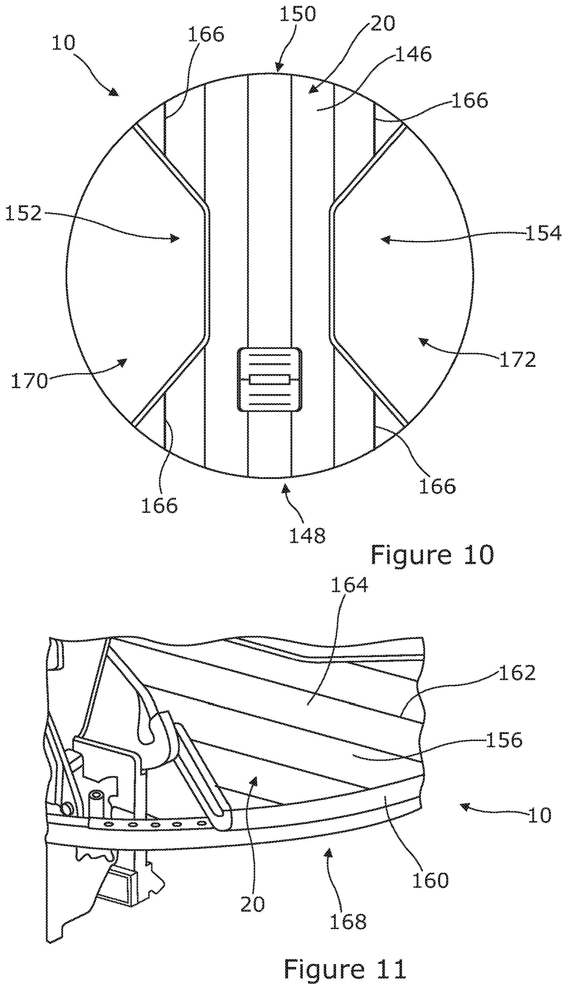

Figures 10 and 11 show a wind turbine structure 10 in accordance with a further embodiment of the invention, in which the closure system 20 includes a plate 146 that covers a part of the opening 22 to be protected, closed off or sealed. As in the embodiments of Figures 2 to 8, the opening 22 of this embodiment is formed in the upper end 24 of a tower segment 15.

The plate 146 is rigid and has first and second ends, 148 and 150 respectively, joined by first and second sides, 152 and 154 respectively. The plate 146 comprises an upper generally planar surface 156 and a lower generally planar surface (not shown), which are joined by a peripheral surface 160. The upper surface 156 includes a plurality of ridges or ribs 162 that extend across the plate 146, from the first end 148 to the second end 150, and that are connected by webs 164. The ribs 162 act to enhance the structural rigidity of the plate 146. The plate 146 of this embodiment further includes four hinges 166 at which the plate 146 can fold. The hinges 166 allow the width of the plate 146 to be reduced, which may be advantageous, for example, during transport of the closure system 20, and when not in use.

The plate 146 is dimensioned in this example to cover a central portion 168 of the opening 22, and to define first and second openings, 170 and 172 respectively, between the plate 146 and the flange 28 of the tower segment 15, when installed on the tower segment 15. In this way, the internal chamber 36 of the tower segment 15 can still be accessed via the first and second openings, 170, 172, even when the plate 146 is installed on the tower segment 15, and the closure system 20 is ready to be fully deployed.

When installed at the tower segment 15, the plate 146 extends across the diameter of the opening 22. As best seen in Figure 10, the first and second ends 148, 150 of the plate 146 are curved to follow the curvature of the outer surface 26 of the tower segment 15, and the first and second sides, 152, 154, of the plate 146 each define a generally U-shaped profile in plan view.

Referring now to Figure 11, an inflatable closure 36 is attached at the first side 152 of the plate 146, towards the first end 148 of the plate 146. The inflatable closure 36 of this embodiment is similar to the inflatable closures 36 of the other embodiments, having a base layer, an air-tight outer layer 54, and a valve (not shown) for inflation and deflation. The inflatable closure 36 is dimensioned so as to fully cover the first opening 170 when deployed. Thus, the inflatable closure 36 has generally U-shaped upper and lower surfaces (not shown), to match the size and shape of the first opening 170. It should be understood that in other embodiments the deployed closure 36 may be dimensioned to only partially cover the first opening 170.

When in the stowed state, the inflatable closure 36 is stored at least partially within the plate 146, in a housing cavity (not shown) defined between the upper surface 156 and the lower surface (not shown) of the plate 146. In other embodiments, the inflatable closure 36 may be contained within a separate housing attached to the plate 146.

To deploy the inflatable closure 36, the closure 36 is partially removed from the housing cavity and the valve is located. An inflation pump is attached to the valve, and the closure 36 is inflated. When deployed, the inflatable closure 36 covers the first opening 170, and is supported from below by the flange 28 of the tower segment 15. An edge region (not shown) of the closure 36 that engages with the plate 146 when inflated is received in an aperture (not shown) that extends across the first side 152 of the plate 146, and in the housing cavity, and engages with the plate 146 in a similar manner to that shown in Figure 9.

Although the closure system 36 of this embodiment includes only a single inflatable closure 36, other embodiments may include additional inflatable closures 36, attached at different positions of the plate 146. For example, a second inflatable closure may be attached at a corresponding position at the second side 154 of the plate 146, so as to cover the second opening 172 when deployed. In another variant, multiple inflatable closures 36 may be installed at one side of the plate 146, and be configured to together fully or partially cover the corresponding opening when deployed.

Many variations and modifications to the above-described arrangements are possible within the scope of the invention.

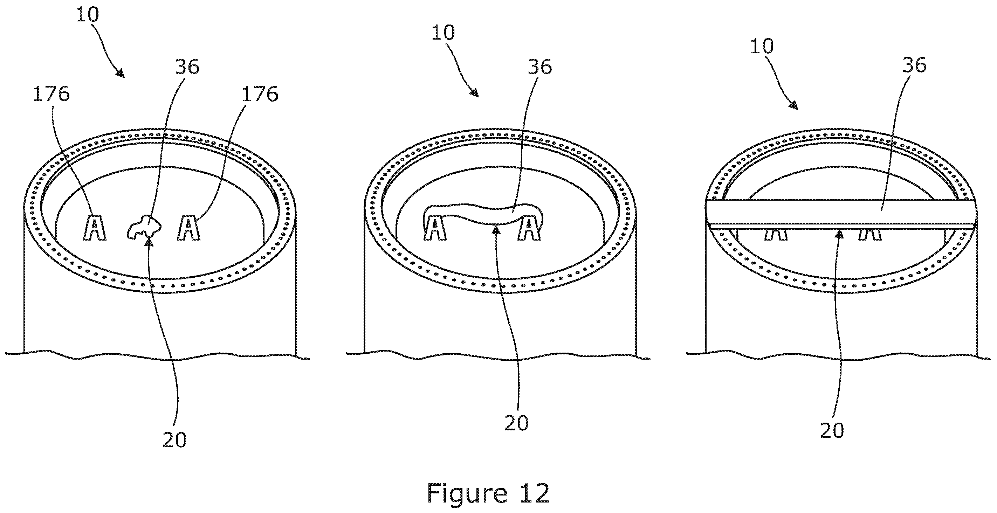

For example, the wind turbine structure 10 may include additional supports 176, as shown in Figure 12, configured to help support the or each inflatable closure 36 in the deployed state. Such supports 176 may be especially useful when the opening 22 to be covered is large, and may help to prevent the deployed closure 36 from sagging.

Although the embodiments described in the preceding paragraph each include a base layer and an outer layer 54, in other embodiments the closure 36 may only include an air-tight outer layer 54, and not include a base layer. Alternatively, the closure 36 may include an airtight inner layer and a protective or structural outer layer.

Closures 36 of the invention are also not limited to including only one valve and one internal chamber 34. Closures 36 of other embodiments of the invention may include multiple valves associated with one internal volume. Closures 36 of other embodiments may further define multiple air-tight chambers, which can be inflated and deflated separately, and preferably sequentially, by means of one or more associated valves.

It is to be understood that many different methods may be used to secure a closure 36 of the invention to a wind turbine structure 10. For example, the closure 36 may be secured in place simply by means of friction between the closure 36 and a surface of the wind turbine structure 10, or may be secured via friction and fastening means. Fastening means may include bolts, screws, and wires, that may extend through fastener-receiving openings of the closure and the wind turbine structure 10. Furthermore, the use of magnets may be employed, especially in embodiments in which the wind turbine structure 10 does not include fastener receiving openings in the vicinity of the closure system 20. In this case, a magnetic element may be attached to the wind turbine structure 10, and a wire may extend from the magnet to a connection point of the closure 36, thereby securing the closure 36 to the structure 10.

Alternatively, the magnet may be directly integrated into the inflatable closure 36 and/or attached to the surface of the closure 36.

Many different shapes and sizes of the closure 36 are possible within the scope of the invention, as well as many different profiles of the closure 36 for engaging with the wind turbine structure 10. For example, the edge profiles 58 of the closures 36 shown in Figures 6, 7 and 9 are not intended to be limiting, and it will be understood that many different profiles 58 are possible. In particular, the edge profile 58 of the closure 36 will depend on the surface that the closure 36 is intended to engage, and if the engagement is in one, two, three, four, five or six directions to the connection region of the wind turbine structure 10.

Finally, it will be understood that although the invention has been described in the context of a tower segment 15, a closure system 20 of the invention could be incorporated at any location at which an opening 22 is to be covered. In other embodiments, the closure system 20 may protect other portions of the wind turbine 8. For example, the closure system 20 could protect blade-receiving apertures of the hub, before the blades 28 have been attached, or could protect hatches or doorways of the wind turbine 8 as well as foundations, transition pieces, blades, nacelles, and wind turbine stands at a preassembly site or a vessel.

### Reference Numbers:

wind turbine 8
wind turbine structure 10
nacelle 12
tower 14
tower segment 15
main rotor arrangement 16
wind turbine blade 18
closure system 20
wind turbine structure opening 22
upper end of tower segment 24
outer surface 26
flange 28
inner surface of flange 30
fastener-receiving openings 32
internal chamber 34
inflatable closure 36
housing 38
body 40
lid 42
internal volume of body 44
opening of body 46
upper surface of inflatable closure 48
lower surface of inflatable closure 50
circumferential surface of inflatable closure 52
outer layer of inflatable closure 54
ribs of inflatable closure 56
edge profile 58
flange-receiving aperture 60
upper edge portion of inflatable closure 62
lower edge portion of inflatable closure 64
engaging profile of flange 66
fastener-receiving openings of inflatable closure 68
openings of lower edge portion 70
upper surface of lower edge portion 72
openings of upper edge portion 74
lower surface of upper edge portion 76
threaded metal coating 78
interior surface 80
bolt 82
edge of opening 84
circumferential lip 86
upper surface of circumferential flange 88
central closure 90
outer closure 92
lower surface of outer closure 94
upper surface of outer closure 96
first side face 98
second side face 100
first end face 102
second end face 104
closure-receiving opening of side faces 108
edge of outer closure 110
upper surface of outer closure 112
lower surface of outer closure 114
outer side surface of outer closure 116
inner side surface of outer closure 118
protrusion of outer closure 120
central portion of opening 122
frame 124
base of frame 126
first flange of frame 128
second flange of frame 130
first edge of base 132
second edge of base 134
rectangular aperture of frame 136
edges of inflatable closure 138
valve 140
upper surface of inflatable closure 142
internal surfaces of frame 144
plate 146
first end of plate 148
second end of plate 150
first side of plate 152
second side of plate 154
upper surface of plate 156
peripheral surface of plate 160
ribs of plate 162
webs of plate 164
hinges of plate 166
central portion of opening 168
first opening 170
second opening 172
support 176

## Claims

1. A wind turbine structure (10) comprising:
a surface defining at least in part an opening (22); and
a closure system (20) provided adjacent the opening (22),
the closure system (20) including an inflatable closure (36) that is inflatable into a deployed state in which the inflatable closure (36) engages the surface so as to cover at least a portion of the opening (22), **characterized in that**
the inflatable closure (36) comprises multiple air-tight internal chambers that can be individually inflated and deflated and/or
the closure system (20) comprises multiple inflatable closures (36).

2. The wind turbine structure (10) of Claim 1, wherein the inflatable closure (36) defines an edge profile (58) that is configured to match a complementary engaging profile (66) defined by the surface of the opening (22).

3. The wind turbine structure (10) of any preceding claim, wherein the inflatable closure (36) in the deployed state defines a plurality of ribs (162) interconnected by webs (164).

4. The wind turbine structure (10) of any preceding claim, wherein the closure system (20) includes a housing (38) which is configured to contain the inflatable enclosure (36) in a stowed state.

5. The wind turbine structure (10) of any preceding claim, wherein the closure system (20) comprises a rigid plate (146) that covers at least a portion of the opening (22).

6. The wind turbine structure (10) of Claim 5, wherein the inflatable closure (36) is housed at least partially within the rigid plate (146) in the stowed state.

7. The wind turbine structure (10) of Claim 5 or Claim 6, wherein the rigid plate (146) is foldable.

8. The wind turbine structure (10) of any preceding claim, wherein the closure system (20) includes an inflation pump to inflate the inflatable closure (36), and wherein the inflation pump is operable to deflate the inflatable closure (36).

9. The wind turbine structure (10) of any preceding claim, wherein the inflatable closure (36) is mounted on an edge (84) of the opening (22).

10. The wind turbine structure (10) of any preceding claim, wherein the inflatable closure (36) comprises a base layer of drop-stitch material.

11. A method of at least partially covering an opening (22) of a wind turbine structure (10), the method comprising;
providing a closure system (20) including an inflatable closure (36) adjacent the opening (22); and
inflating the inflatable closure (36) from a stowed state to a deployed state in which the inflatable closure (36) covers at least a portion of the opening (22), **characterized in that**
the inflatable closure (36) comprises multiple air-tight internal chambers that can be individually inflated and deflated and/or
the closure system (20) comprises multiple inflatable closures (36).

12. The method of Claim 11, wherein engaging the inflatable closure (36) with the surface comprises engaging an edge profile (58) of the inflatable closure (36) with a complementary engaging profile (66) defined by the surface of the opening (22).

13. The method of any of Claims 11 or 12, comprising inflating the inflatable closure (36) from a housing (38) in which it is contained in the stowed state.

14. The method of any of Claims 11 to 13, comprising deflating the inflatable closure (36) so as to provide access to a portion of the opening (22).

15. The method of any of Claims 11 to 14, comprising remotely activating inflation and/or deflation of the inflatable closure (36).

## Patentansprüche

1. Windkraftanlagenstruktur (10), umfassend:
eine Oberfläche, die mindestens teilweise eine Öffnung (22) definiert; und
ein Verschlusssystem (20), das neben der Öffnung (22) bereitgestellt ist.
wobei das Verschlusssystem (20) einen aufblasbaren Verschluss (36) beinhaltet, der in einen entfalteten Zustand aufblasbar ist, in dem der aufblasbare Verschluss (36) mit der Oberfläche in Eingriff gelangt, um mindestens einen Teil der Öffnung (22) abzudecken, **dadurch gekennzeichnet, dass**
der aufblasbare Verschluss (36) mehrere luftdichte Innenkammern umfasst, die einzeln aufgeblasen und entleert werden können, und/oder
das Verschlusssystem (20) mehrere aufblasbare Verschlüsse (36) umfasst.

2. Windkraftanlagenstruktur (10) nach Anspruch 1, wobei der aufblasbare Verschluss (36) ein Kantenprofil (58) definiert, das konfiguriert ist, zu einem komplementären Eingriffsprofil (66) zu passen, das durch die Oberfläche der Öffnung (22) definiert ist.

3. Windkraftanlagenstruktur (10) nach einem vorstehenden Anspruch, wobei der aufblasbare Verschluss (36) im entfalteten Zustand eine Vielzahl von Rippen (162) definiert, die durch Stege (164) miteinander verbunden sind.

4. Windkraftanlagenstruktur (10) nach einem vorstehenden Anspruch, wobei das Verschlusssystem (20) ein Gehäuse (38) beinhaltet, das konfiguriert ist, den aufblasbaren Verschluss (36) im verstauten Zustand aufzunehmen.

5. Windkraftanlagenstruktur (10) nach einem vorstehenden Anspruch, wobei das Verschlusssystem (20) eine starre Platte (146) umfasst, die mindestens einen Teil der Öffnung (22) abdeckt.

6. Windkraftanlagenstruktur (10) nach Anspruch 5, wobei der aufblasbare Verschluss (36) im verstauten Zustand mindestens teilweise in der starren Platte (146) untergebracht ist.

7. Windkraftanlagenstruktur (10) nach Anspruch 5 oder Anspruch 6, wobei die starre Platte (146) faltbar ist.

8. Windkraftanlagenstruktur (10) nach einem vorstehenden Anspruch, wobei das Verschlusssystem (20) eine Aufblaspumpe zum Aufblasen des aufblasbaren Verschlusses (36) beinhaltet und wobei die Aufblaspumpe zum Entleeren des aufblasbaren Verschlusses (36) betätigbar ist.

9. Windkraftanlagenstruktur (10) nach einem vorstehenden Anspruch, wobei der aufblasbare Verschluss (36) an einer Kante (84) der Öffnung (22) befestigt ist.

10. Windkraftanlagenstruktur (10) nach einem vorstehenden Anspruch, wobei der aufblasbare Verschluss (36) eine Basisschicht aus Drop-Stitch-Material umfasst.

11. Verfahren zum mindestens teilweisen Abdecken einer Öffnung (22) einer Windkraftanlagenstruktur (10), wobei das Verfahren Folgendes umfasst:
Bereitstellen eines Verschlusssystems (20), das einen aufblasbaren Verschluss (36) beinhaltet, neben der Öffnung (22); und
Aufblasen des aufblasbaren Verschlusses (36) aus einem verstauten Zustand in einen entfalteten Zustand, in dem der aufblasbare Verschluss (36) mindestens einen Teil der Öffnung (22) abdeckt, **dadurch gekennzeichnet, dass**
der aufblasbare Verschluss (36) mehrere luftdichte Innenkammern umfasst, die einzeln aufgeblasen und entleert werden können, und/oder
das Verschlusssystem (20) mehrere aufblasbare Verschlüsse (36) umfasst.

12. Verfahren nach Anspruch 11, wobei Eingreifen des aufblasbaren Verschlusses (36) mit der Oberfläche Eingreifen eines Kantenprofils (58) des aufblasbaren Verschlusses (36) mit einem komplementären Eingriffsprofil (66) umfasst, das durch die Oberfläche der Öffnung (22) definiert ist.

13. Verfahren nach einem der Ansprüche 11 oder 12, umfassend Aufblasen des aufblasbaren Verschlusses (36) aus einem Gehäuse (38), in dem er im verstauten Zustand aufgenommen ist.

14. Verfahren nach einem der Ansprüche 11 bis 13, umfassend Entleeren des aufblasbaren Verschlusses (36), um Zugang zu einem Teil der Öffnung (22) bereitzustellen.

15. Verfahren nach einem der Ansprüche 11 bis 14, umfassend ferngesteuertes Aktivieren von Aufblasen und/oder Entleeren des aufblasbaren Verschlusses (36).

## Revendications

1. Structure d'éolienne (10) comprenant :
une surface définissant au moins en partie une ouverture (22) ; et
un système de fermeture (20) prévu adjacent à l'ouverture (22),
le système de fermeture (20) incluant une fermeture gonflable (36) qui est gonflable dans un état déployé dans lequel la fermeture gonflable (36) se met en prise avec la surface de manière à couvrir au moins une partie de l'ouverture (22), **caractérisée en ce que**
la fermeture gonflable (36) comprend plusieurs chambres internes étanches à l'air qui peuvent être gonflées et dégonflées individuellement, et/ou
le système de fermeture (20) comprend plusieurs fermetures gonflables (36).

2. Structure d'éolienne (10) selon la revendication 1, dans laquelle la fermeture gonflable (36) définit un profil de bord (58) configuré pour correspondre à un profil de mise en prise complémentaire (66) défini par la surface de l'ouverture (22).

3. Structure d'éolienne (10) selon une quelconque revendication précédente, dans laquelle la fermeture gonflable (36) dans l'état déployé définit une pluralité de nervures (162) interconnectées par des traverses (164).

4. Structure d'éolienne (10) selon une quelconque revendication précédente, dans laquelle le système de fermeture (20) inclut un boîtier (38) configuré pour contenir la fermeture gonflable (36) dans un état replié.

5. Structure d'éolienne (10) selon une quelconque revendication précédente, dans laquelle le système de fermeture (20) comprend une plaque rigide (146) qui couvre au moins une partie de l'ouverture (22).

6. Structure d'éolienne (10) selon la revendication 5, dans laquelle la fermeture gonflable (36) est logée au moins partiellement à l'intérieur de la plaque rigide (146) dans l'état replié.

7. Structure d'éolienne (10) selon la revendication 5 ou la revendication 6, dans laquelle la plaque rigide (146) est pliable.

8. Structure d'éolienne (10) selon une quelconque revendication précédente, dans laquelle le système de fermeture (20) inclut une pompe de gonflage pour gonfler la fermeture gonflable (36), et dans laquelle la pompe de gonflage est fonctionnelle pour dégonfler la fermeture gonflable (36).

9. Structure d'éolienne (10) selon une quelconque revendication précédente, dans laquelle la fermeture gonflable (36) est montée sur un bord (84) de l'ouverture (22).

10. Structure d'éolienne (10) selon une quelconque revendication précédente, dans laquelle la fermeture gonflable (36) comprend une couche de base de matériau drop-stitch.

11. Procédé de recouvrement au moins partiel d'une ouverture (22) d'une structure d'éolienne (10), le procédé comprenant ;
la fourniture d'un système de fermeture (20) incluant une fermeture gonflable (36) adjacente à l'ouverture (22) ; et
le gonflage de la fermeture gonflable (36) de l'état replié à l'état déployé dans lequel la fermeture gonflable (36) couvre au moins une partie de l'ouverture (22), **caractérisé en ce que**
la fermeture gonflable (36) comprend plusieurs chambres internes étanches à l'air qui peuvent être gonflées et dégonflées individuellement, et/ou
le système de fermeture (20) comprend plusieurs fermetures gonflables (36).

12. Procédé selon la revendication 11, dans lequel la mise en prise de la fermeture gonflable (36) avec la surface comprend la mise en prise d'un profil de bord (58) de la fermeture gonflable (36) avec un profil de mise en prise complémentaire (66) défini par la surface de l'ouverture (22).

13. Procédé selon l'une quelconque des revendications 11 ou 12, comprenant le gonflage de la fermeture gonflable (36) à partir d'un boîtier (38) dans lequel elle est contenue dans l'état replié.

14. Procédé selon l'une quelconque des revendications 11 à 13, comprenant le dégonflage de la fermeture gonflable (36) afin de permettre l'accès à une partie de l'ouverture (22).

15. Procédé selon l'une quelconque des revendications 11 à 14, comprenant l'activation à distance du gonflage et/ou du dégonflage de la fermeture gonflable (36).
